# EUROPEAN PATENT APPLICATION

(11) **EP 4 053 258 A1**
(43) Date of publication of application: **07.09.2022**
(21) Application number: 21160683.5
(22) Date of filing: 04.03.2021
(51) Int. Cl.: C12H 1/07, C12H 1/044, C01B 33/00, B01J 29/03

(54) **FUNCTIONALIZED MICROPARTICLES OF MESOPOROUS SILICA FOR PROTEIN STABILIZATION AND METAL REMOVAL FROM A BEVERAGE**

(71) Applicant: Esseco S.r.l., 28069 San Martino di Trecate NO (IT)
(72) Inventor: TRIULZI, Giovanni, 20010 MESERO (IT); ANGIULI, Fabio, 44122 FERRARA (IT)
(74) Representative: Biggi, Cristina

(57) **Abstract**

The present invention relates to mesoporous silica particles functionalized with at least one group having an acidic functionality and/or at least one group having a hydrophobic functionality anchored to the silica by means of a silicon-oxygen bond. The acidic functionality is preferably an alkyl group bearing a group selected from -SO₃H, -COOH, -PO(OH)₂.

The hydrophobic functionality is preferably a saturated, linear alkyl group. The invention also relates to the use of the mesoporous silica particles for the removal of proteins from and/or the reduction of the concentration of several metals in a beverage having a pH lower than 4, preferably wine, beer, cider, and a combination thereof.

## Description

### TECHNICAL FIELD

The present invention relates to macroparticles of functionalized mesoporous silica (FMS) and the use thereof both on their own and inside a cartridge or a filter device, for the stabilization of a beverage through the removal of proteins and/or metals.

### STATE OF THE ART

"Protein casse" is a phenomenon commonly observable in wines, in particular in the case of white and/or rose wines and entails the precipitation of proteins contained therein in an uncontrolled and unpredictable manner over time. The main proteins responsible for this phenomenon belong to two families with very similar characteristics: the family of thaumatins and the family of chitinases. Both of these families of proteins possess a globular structure with a mass comprised between 20 and 30 kDalton, a size between 5 and 20 nm and an isoelectric point of 4.5 and 5, respectively (so that, for example, at the typical pH of wine - 2.8-3.5 - they are both positively charged). Such proteins are typically defined as unstable proteins, as they tend to become insoluble over time. This phenomenon is particularly undesirable, as it causes turbidity, flocculation and the possible formation of a solid deposit, even after the wine has been bottled, making the product no longer attractive from a commercial viewpoint, as it is perceived negatively by consumers. Such a phenomenon is also observed in other types of beverages, in particular alcoholic beverages such as, for example, beer.

Protein casse can be prevented by means of pre-treatments that allow a so-called "stabilized" or "clarified" beverage to be obtained.

At the present state of the art, one of the most widely used solutions for preventing the phenomenon of protein casse provides for the use of bentonite. The term "bentonite" indicates a vast number of clays of volcanic origin, mainly consisting of montorillonite, a clayey mineral belonging to the class of phyllosilicates. From a chemical point of view, these clays consist of aluminium silicates comprising iron oxides and other cations, such as Mg, Ca and Na, in variable amounts. Bentonite is moreover a highly porous material, negatively charged at the typical pH of wine (2.8-3.5), and possesses a high absorption capacity (bentonite has the capacity to absorb considerable amounts of water, thus increasing its volume).

In order to be able to be used for the stabilization of beverages, wines in particular, commercial bentonite must be subjected to a step of hydration/swelling in water and only afterwards can it be dispersed in an appropriate volume of the beverage to be treated, where it will settle in a variable period of time.

Although a stabilization treatment with bentonite proves to be effective for the purpose of protein removal, the use of said material entails numerous disadvantages and unwanted effects, first and foremost the loss of a large volume of the beverage which remains absorbed within the bentonite.

At present it is estimated that, in the wine industry alone, about 600 tons/year of bentonite are used, in the form of natural sodium, calcium or activated bentonite. Though the cost of the material in itself is not excessively high, the total cost of the stabilization process is decidedly more substantial. This increase in costs is closely connected to the fact that bentonite, once dispersed in the volume of wine to be treated, forms a non-compact sediment that incorporates within it a certain amount of wine (3-6%) that is inevitably lost during removal of the sediment itself.

A further disadvantage tied to the use of bentonite is the fact that its use impacts the times of the stabilization process, as 3 to 6 days are required for the complete sedimentation and maximisation of its absorbent effect. Furthermore, 2-24 hours must be added, according to the characteristics of the starting bentonite, the time necessary for the pre-treatment of hydrating the material. This step proves to be decidedly laborious as well as causing a further lengthening of the process times, and is in fact disadvantageous on an industrial level from an economic viewpoint.

A further disadvantage connected to the use of bentonite regards its poor selectivity, as a result of which, simultaneously with the removal of unstable proteins, aromas, colloids and other components that are valuable for the general quality of the beverage itself are also removed, causing a general impairment of the product.

Finally, another aspect that is drawing increasing attention from industry operators is the release of constituent cations of bentonite (in particular Na and Ca) and of other metals generally present therein as impurities (for example iron, aluminium, copper, zinc, manganese).

The release of these cations into the beverage subjected to stabilization proves to be particularly disadvantageous, particularly in the case of wine, since these cations can act as catalysts for the redox reactions that take place in the wine in the presence of small amounts of dissolved oxygen. These reactions involve different substances, such as, for example, aromas, pigments and tannins, and can drastically modify the organoleptic qualities of the wine, often making a further treatment with specific materials (i.e. addition of tannins, addition of calcium phthalate, use of potassium ferrocyanide, use of citric acid) necessary in order to remove at least in part the metal cations present in the wine.

Furthermore, it is important also to consider that the effectiveness in removing proteins and the entity and type of metals released are closely connected to the place of extraction and the type of bentonite used. This results in the need for the operator to constantly test the quality of every batch of bentonite in terms of deproteinising capacity, entity of the sediment and the release of metals.

In recent years, numerous resources have been deployed with the aim of finding a valid alternative to the use of bentonite. For example, Marangon et. al., Australian Journal of Grape and Wine Research 17, 28-35, 2011, proposed the use of mesoporous zirconium dioxide pellets as an alternative material to bentonite. Although zirconium dioxide is capable of removing proteins and bringing the different wines considered into a condition of stability, the amount in grams of material per litre required to obtain this result is more than twenty times that of bentonite, essentially making this material uncompetitive in practical and economic terms. M. Sarmento et. al., Selection of low swelling materials for protein adsorption from white wines, International Journal of Food Science & Technology, 35, 41-47, 2000), instead tested various ion-exchange resins and other materials available on the market with a low swelling index. Among these commercial products, Macro-prep^{®} 50S, an acrylic resin activated with sulphonic groups, Spherosil^{®} LS, based on microporous silica functionalized with sulphonic groups, and StreamlineTM SP, based on agarose and likewise containing sulphonic groups, showed to be the most promising candidates to replace bentonite.

Although these synthetic materials possess a good stability and good effectiveness in removing the wine proteins, their performance does not reach levels such as to be competitive with sodium bentonites.

There thus remains a need in the sector to provide a material for the stabilization of beverages, preferably wines, that is capable of solving, with at least the same effectiveness if not a greater effectiveness, the problem of the protein stability of beverages, but which is also capable at the same time of overcoming or at least reducing the typical secondary effects deriving from the use of bentonite. In particular, there remains a need to provide a material that is "standard over time" (i.e. that is always the same structurally and chemically), ready to use (i.e. a material that can be directly used without a prior hydration/swelling step), which gives rise to a rapid, compact sedimentation, does not release metal cations (but even enables the simultaneous removal of some metals that are "dangerous" for the stability of the beverage, possibly already naturally present in the beverage itself) and enables selective protein removal without absorbing aromas and other substances, so as not to alter the organoleptic qualities of the beverage itself.

The present invention resolves the above-described problems of the prior art by providing mesoporous silica particles which, thanks to the specific functionalization of the silica, their porosity and their size (macroparticles), enable an effective stabilization of beverages, both in a flow process and through sedimentation, by removing the unstable proteins contained therein, while also assuring the simultaneous removal of metals.

The functionalized mesoporous silica particles according to the present invention also show to be advantageous from a cost standpoint for the stabilization process, since they not only enable the overall times of the process to be reduced, but can also be recovered and regenerated for a certain number of cycles, thus proving to be a particularly advantageous material from both a cost and environmental standpoint.

### SUMMARY OF THE INVENTION

The present invention relates to mesoporous silica particles functionalized with at least one group having an acidic functionality and/or at least one group having a hydrophobic functionality anchored to silica by means of a silicon-oxygen bond. The acidic functionality is preferably an alkyl group bearing a group selected from -SO₃H, -COOH and -PO(OH)₂.

The hydrophobic functionality is preferably a saturated, linear alkyl group. The invention also relates to the use of the mesoporous silica particles to remove proteins from a beverage having a pH lower than 4, preferably from wine, beer, cider, and a combination thereof.

In a further aspect, the invention relates to a filter cartridge comprising at least one porous medium at least partially coated, preferably totally coated, with the functionalized mesoporous silica particles according to the invention.

In a further aspect, the invention relates to a filter device comprising a main body defining an inlet conduit for the beverage to be stabilized, an outlet conduit for the stabilized beverage and a plurality of channels extending between the inlet conduit and the outlet conduit, wherein each channel passes through at least one filter cartridge.

### BRIEF DESCRIPTION OF THE FIGURES

Figure 1 shows a diagram of the functionalization of the mesoporous silica with acidic and hydrophobic functionalities according to a preferred embodiment of the invention, as shown in Example 1 (silica-oxygen bonds not shown in the figure).
Figure 2 shows a micrograph of the synthesised particles as shown in Example 1, obtained with a transmission electron microscope (TEM) and in which one can appreciate the mesoporous structure of the FMS.
Figure 3 shows the entity of sediment produced by different commercial bentonites (Ph, Pn and Pc bentonite) compared with that produced by the particles obtained as per Example 1 (FMS) following a protein stabilization treatment with a static process on Chardonnay wine, as described in Example 2.1 (24 hour sedimentation).
Figure 4 shows the variation in protein instability in a wine treated as described in the Example 2.5 with different concentrations of functionalized mesoporous silica particles with solely acidic functionalities (II) and of functionalized mesoporous silica particles both with acidic and hydrophobic functionalities (I), synthesised as per Example 1.
Figure 5 shows a graph which, as described in Example 4, indicates the concentration of fermentative esters in various wines treated and not treated, respectively, with commercial bentonite and particles obtained as per Example 1.
Figure 6 shows the SDS-PAGE electrophoretic analysis as described in Example 5 and carried out on untreated samples of Trebbiano wine (Tb1), samples treated with PLC bentonite (Tb2) and with particles according to the present invention obtained as described in Example 1 (Tb3).

### DETAILED DESCRIPTION OF THE INVENTION

For the purposes of the present invention, the term "macroparticles" means particles having an average diameter, as measured with a scanning electron microscope (SEM), greater than 0.1 µm.
For the purposes of the present invention, "protein compound(s)" and "protein(s)" are used as perfectly interchangeable synonyms.

The subject matter of the present invention relates to mesoporous silica particles functionalized on the surface with:
(i) at least one group having acidic functionality, wherein said group has the general formula (I): 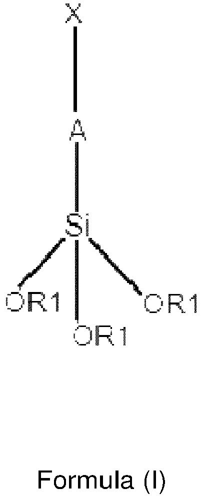 and
(ii) at least one group having hydrophobic functionality, wherein said group has the general formula (II): 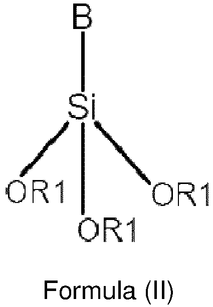
   wherein at least one of the R1 groups of the formulas (I) and (II) represents a covalent bond between the oxygen of the respective formula (I) or (II) and the silicon of the silica (covalent silicon-oxygen bond), the other two R1 groups being independently H or a covalent silicon-oxygen bond;
   A is a linear or branched, saturated or unsaturated C₂-C₁₂ alkyl group, preferably C₂-C₈, more preferably C₃-C₆, optionally substituted with at least one group selected from: ether (-O-), thioether (-S-), amino (-NH-), cyano (-CN), carbonyl (-CO), epoxide, a halogen, preferably -CI or -Br, aryl, optionally substituted, and a combination thereof.
   X is an acidic functionality selected in the group consisting of: -SO₃H,-COOH, -PO(OH)₂, and a combination thereof;
   B is a linear or branched, saturated or unsaturated C₂-C₁₈ alkyl group, preferably C₄-C₁₈, more preferably C₆-C₁₄, even more preferably C₈-C₁₂, optionally substituted with at least one group selected from ether (-O-), thioether (-S-), amino (-NH-), cyano (-CN), carbonyl (-CO), epoxide, a halogen, preferably -CI or -Br, aryl, optionally substituted, and a combination thereof.

The particles preferably have a diameter comprised between 0.1 and 200 µm and comprise pores having a diameter larger than 1 nm, with the component comprised between 5 and 50 nm greater than 50%, preferably greater than 60%.

According to a particularly preferred embodiment of the present invention, at least two R1s of the formula (I) represent a covalent silicon-oxygen bond, preferably the three R1s of the formula (I) represent a covalent silicon-oxygen bond.
According to a particularly preferred embodiment of the present invention, at least two R1s of the formula (II) represent a covalent silicon-oxygen bond, preferably the three R1s of the formula (II) represent a covalent silicon-oxygen bond.

Preferably, the formulas (I) and (II) both have at least two R1s corresponding to a covalent silicon-oxygen bond, preferably all the R1s of the formulas (I) and (II) correspond to a silicon-oxygen bond.

In a preferred embodiment, A is a saturated linear C₂-C₈, preferably saturated linear C₃-C₆ alkyl group; more preferably it is a saturated linear C₃ alkyl group.
Preferably, X is a -SO₃H acidic functionality.
Preferably, B is a saturated linear C₆-C₁₄, preferably saturated linear C₈-C₁₂ alkyl group; more preferably it is a saturated linear C₈ alkyl group.
In a preferred embodiment of the invention, the formulas (I) and (II) both have at least two R1s corresponding to a covalent silicon-oxygen bond, preferably all the R1s of the formulas (I) and (II) correspond to a silicon-oxygen bond; A is a saturated linear C₂-C₈, preferably saturated linear C₃-C₆ alkyl group, more preferably a saturated linear C₃ alkyl group; X is a-SO₃H acidic functionality; B is a saturated linear C₆-C₁₄, preferably saturated linear C₈-C₁₂ alkyl group; more preferably it is a saturated linear C₈ alkyl group.

The at least one group (II) having hydrophobic functionality is obtained from a reaction of anchorage, to the surface of the silica, of at least one precursor of formula (IIa): 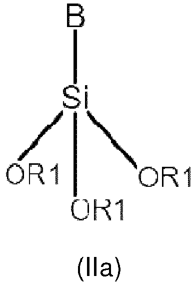 wherein B is as described above and the R1 groups are independently selected from methyl, ethyl and propyl. Preferably, the R1 groups are identical to one another and are selected from methyl, ethyl and propyl. More preferably, the 3 R1 groups are methyl or ethyl.

The reaction of anchorage of the precursor of formula (IIa) to the surface of the silica takes place through the formation of at least one silicon-oxygen bond, preferably at least two silicon-oxygen bonds, more preferably at least three silicon-oxygen bonds. The at least one silicon-oxygen bond forms through the exit of at least one -OR1 group of the precursor (IIa) and the formation of the respective R1-OH alcohol (ethyl, methyl or propyl alcohol).
The precursor of formula (IIa) is preferably selected from: (11-methoxymethoxyundecyl)trimethoxysilane (CAS 944720-78-9), (3-methoxypropyl)trimethoxysilane (CAS 33580-59-5), (3,3-dimethylbutyl)trimethoxysilane (CAS 157223-36-4), (N,N-octyl-3-aminopropyl)trimethoxysilane (CAS 89130-62-1), 11-cyanoundecyltrimethoxysilane (CAS 253788-37-3), 11-chloroundecyltrimethoxysilane (CAS 17948-05-9), 8-bromooctyltrimethoxysilane (CAS 82985-34-0), 7-octenyltrimethoxysilane

(CAS 52217-57-9), 4-phenylbutyltrimethoxysilane (CAS 152958-91-3), (11-diethylphosphonateundecyl)trimethoxysilane (CAS 944721-48-6), (3-glycidoxypropyl)trimethoxysilane (CAS 2530-83-8), 8-oxiran-2-yloctyltriethoxysilane (CAS 35567-31-8), S-(octanoyl)mercaptopropyltriethoxysilane (CAS 220727-26-4) or it is : 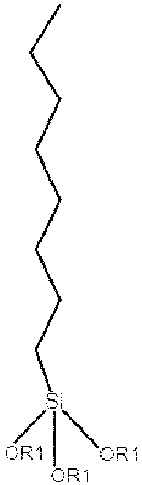 wherein the R1 groups are as previously defined.

Preferably, the precursor of formula (IIa) is: 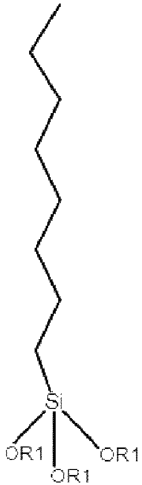 wherein the R1 groups are selected independently from methyl, ethyl and propyl. The R1 groups are preferably identical to one another and are selected from methyl, ethyl and propyl. More preferably, the 3 R1 groups are methyl.

The at least one group (I) having an acidic functionality is obtained from a reaction of anchorage, to surface of said silica, of a precursor of formula (Ia): 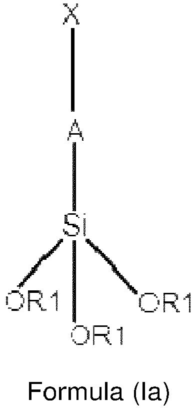
wherein A is as described above;
X is selected from: -SH, -COOH, -PO(OH)₂;
the R1 groups are independently selected from methyl, ethyl and propyl. Preferably, the R1 groups are identical to one another and are selected from methyl, ethyl and propyl. More preferably, the 3 R1 groups are methyl or ethyl.

Preferably, the at least one precursor of acidic functionality has formula (Ia) wherein:
A is a saturated linear C₂-C₈ alkyl group, preferably a saturated linear C₃-C₆ alkyl group, more preferably it is a saturated linear C₃ alkyl group;
X is -SH.

In a particularly preferred embodiment, in the precursor of formula (la), A is a saturated linear C₃-C₆ group, more preferably it is a saturated linear C₃ group and X is -SH.
In the case in which X is -SH in the precursor of formula (la), after the formation of the silicon-oxygen bond between the precursor and the silica of the particles, the functionalized particles are subjected to oxidation of the -SH group to a -SO₃H group, preferably by treatment with H₂O₂.

According to any one of the previously described embodiments, the at least one group having acidic functionality and the at least one group having hydrophobic functionality are anchored to the mesoporous surface of the silica, both on the outer surface of the particles and inside the pores.

The particles as described above preferably have a diameter, as measured by a scanning electron microscope (SEM), comprised between 0.1 and 200 µm.
According to one embodiment, the functionalized mesoporous silica particles according to the present invention are characterised by having a non-homogeneous size distribution of said pores, wherein from 20 to 30% of the pores have an average diameter comprised between 1 and 5 nm, from 50 to 65 % of the pores have an average diameter comprised between 5 and 50 nm and from 6 to 8% of the pores have an average diameter comprised between 50 and 100 nm and from 3 to 5% of the pores have a diameter larger than 100 nm.
The method used for the porosimetry analysis is the DFT (density functional theory) with nitrogen gas-volumetric adsorption at 77K by means of the Micromeritics ASAP2020.
According to one embodiment, the functionalized mesoporous silica particles according to the present invention comprise from 86 to 92% by weight of silica and from 4 to 14% by weight of acidic functionality and of hydrophobic functionality as described above.
The functionalized mesoporous silica particles according to the present invention preferably comprise from 86 to 92% by weight of silica, from 2 to 7% by weight of acidic functionality and from 2 to 7% by weight of hydrophobic functionality as described above.
According to a particularly preferred embodiment of the invention, the functionalized mesoporous silica particles according to the present invention comprise 90% by weight of silica, 5% by weight of acidic functionalities and 5% by weight of hydrophobic functionalities. Advantageously, such a ratio between the silica and the acidic and hydrophobic functionalities and, preferably, the specific ratio between the two functionalities, proves to be optimal for the stabilization of beverages. Without wishing to be bound to a specific theory, the Applicant has found that increasing the component of acidic functionalities decreases the efficiency of the particles in removing the proteins whereas if the component of hydrophobic functionalities is increased, the dispersion of the particles within the beverage to be stabilized proves to be more difficult.
According to one embodiment, the functionalized mesoporous silica particles according to the present invention are characterised by possessing a surface area larger than 500 m²/g, preferably comprised between 500 and 1000 m²/g, more preferably comprised between 700 and 1000 m²/g.
Without wishing to be bound to a specific theory, the Applicant has found that the functionalization of the mesoporous silica according to the present invention with the specific combination of acidic and hydrophobic functionalities of the invention makes it possible to obtain mesoporous silica particles which possess a negative electrostatic charge and simultaneously a hydrophobic component. These characteristics are optimal for interaction with the proteins present within a beverage to be stabilized, preferably within a beverage having a pH lower than 4, more preferably within a wine. These proteins in fact have both a hydrophobic component and a component that is generally positively charged at the pH values of the beverages to be stabilized. The functionalized mesoporous silica particles thus enable these proteins to be attracted thanks to the electrostatic forces and trapped and maintained within their mesoporous structure thanks to the hydrophobic interactions. Moreover, without wishing to be bound to a specific theory, it is possible to affirm that, in addition to the aforesaid functionalization, the characteristic mesoporosity and the specific pore size play an important role for the effectiveness of stabilization, as they enable a large surface area to be obtained in combination with pore sizes such as to be able to advantageously to accommodate the proteins to be removed (typically having a size > 5 nm) within them.

The subject matter of the present invention further relates to a process for obtaining the functionalized mesoporous silica particles as previously described. Said process comprises the steps of:
a) preparing an acidic aqueous suspension of a polymeric template, wherein said acidic aqueous suspension optionally comprises a fluoride, preferably selected in the group consisting of: NH₄F, NaF and KF, and mixing until the formation of micelle templates;
b) adding a tetra-alkyl orthosilicate as a silica precursor, said tetra-alkyl orthosilicate being preferably selected in the group consisting of: tetraethyl orthosilicate (TEOS), tetramethyl orthosilicate and tetrapropyl orthosilicate, until the formation of silica particles;
c) functionalizing the silica particles by adding:
   (i) at least one precursor of a group having an acidic functionality, wherein said precursor has the general formula (Ia) as described above;
      and
   (ii) at least one precursor of a group having a hydrophobic functionality, wherein said precursor has the general formula (IIa) as described above;
d) removing the template, preferably by means of at least one wash with an alcohol.

Said polymeric template used in step a) advantageously allows the desired morphology to be imparted to the particles according to the present invention.
Said polymeric template is preferably selected in the group consisting of: a block copolymer, preferably selected from: a block copolymer containing polyethylene oxide and polypropylene oxide; a PEG-PPG-PEG triblock copolymer, a triblock copolymer, more preferably a triblock copolymer containing two blocks of polyethylene oxide and one block of polypropylene oxide or one block of polyethylene oxide and two blocks of polypropylene oxide.
More preferably, said template is Pluronic^{®}, more preferably Pluronic^{®} P123.
Preferably, said at least one precursor of a group having an acidic functionality (i) and said at least one precursor of a group having a hydrophobic functionality (ii) are as previously described.
According to a particularly preferred embodiment of the invention, step a) takes place in the presence of a fluoride, preferably ammonium fluoride.
The use of said fluoride, preferably ammonium fluoride, in combination with the use of said template, favours the formation of the desired morphology, in particular by favouring the formation of the characteristic mesoporosity both in terms of pore size and in terms of pore distribution. As also demonstrated in the examples section, the Applicant has found that the role of fluoride, and particularly ammonium fluoride (NH₄F), in the synthesis of the particles according to the present invention, though not indispensable for the formation of the particles themselves, nonetheless shows to have advantageous effects in that it enables a reduction in the reaction times compared to a process carried out in the absence of said fluoride; furthermore, it avoids further steps or subsequent post-treatments and enables the complete stabilization of a beverage to be obtained with a reduced quantity of particles (in other words, it enables particles to be obtained which are more effective in stabilizing beverages).
In the case in which the precursor of the group having acidic functionality has an X group which is -SH, step c) also comprises the addition of an oxidising agent, preferably H₂O₂.
Step c) as described above is a step in which the anchorage reaction of the at least one precursor (Ia) and the at least one precursor (IIa) due to the exit of alkoxy groups with the formation of R1OH (with R1 as described above) takes place according to the following diagram 1, which shows the reaction mechanism by way of example solely for the precursor (Ia) and where n is a number that depends on the number of silicon-oxygen bonds that are formed between the precursor (Ia) and the silica:

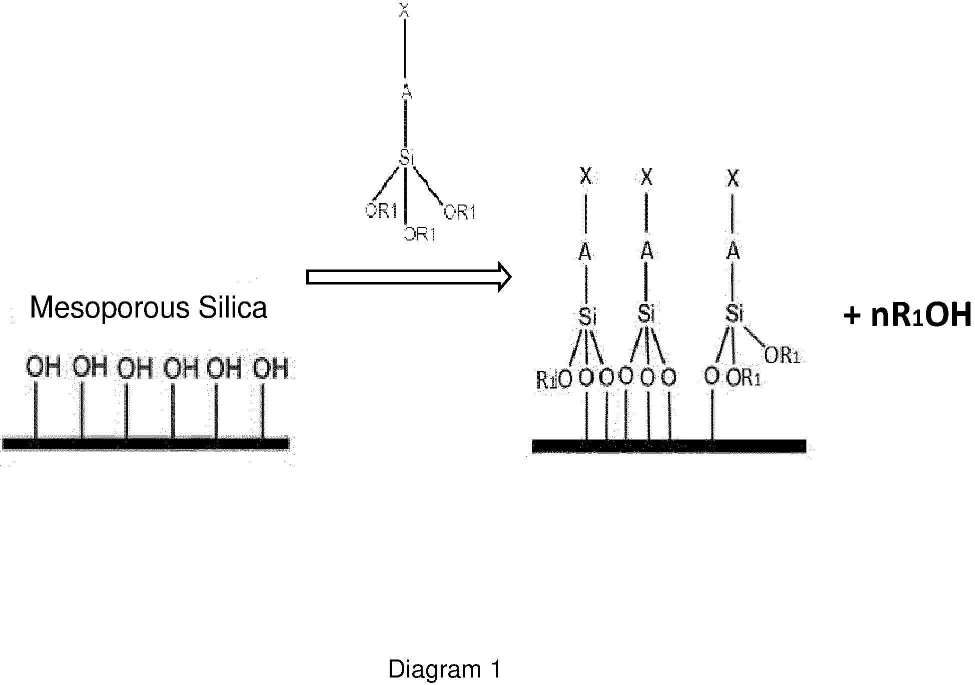

According to a preferred embodiment, the process according to the present invention, after step c) and before step d), comprises a step c') of allowing the pores of the silica particles formed in step b) to expand at a constant temperature greater than 70 °C.
Said alcohol of step d) is preferably selected in the group consisting of: methanol, ethanol, propanol, isopropanol, butanol, and a combination thereof.

The subject matter of the present invention also relates to the use of functionalized mesoporous silica particles for the removal of proteins from a beverage having a pH lower than 4, wherein said particles are functionalized with at least one group having an acidic functionality of formula (I) and/or at least one group having a hydrophobic functionality of formula (II), as previously described; the silica particles are preferably functionalized with both the acidic and hydrophobic functionalities.

The functionalization of the particles is obtained from the reaction of anchorage, to the surface of said silica, of:
(i) at least one precursor of a group having an acidic functionality of formula (Ia) as previously described and/or
(ii) at least one precursor of a group having a hydrophobic functionality of formula (IIa) as previously described,
wherein the precursor (Ia) and/or (IIa) binds to the surface of said silica by means of at least one silicon-oxygen bond, preferably by means of at least two silicon-oxygen bonds, more preferably by means of at least three silicon-oxygen bonds.
The particles preferably have a diameter comprised between 0.1 and 200 µm and comprise pores having a diameter larger than 1 nm, with the component comprised between 5 and 50 nm greater than 50%, preferably greater than 60%.
According to a particularly preferred embodiment, the use of the aforesaid particles according to the present invention allows a simultaneous further partial removal of metals from said beverage, thus advantageously resulting in a superior performance of stabilization of the beverage, which will be devoid of unstable proteins and will contain a lower concentration of any metals that might catalyse undesirable redox reactions within it. According to one embodiment of the invention, said beverage has a pH lower than 4, preferably comprised between 3 and 4.
According to a preferred embodiment of the invention, said beverage is an alcoholic beverage, preferably comprising or consisting in: wine, beer, cider, and a combination thereof.
According to an even more preferred embodiment, said alcoholic beverage is wine, preferably white wine and/or rose wine.
According to a preferred embodiment of the invention, said particles as described above can be used for the stabilization of a beverage without first being subjected to pre-treatments, for example hydration.
Without wishing to be bound to a specific theory, the Applicant has found that the use of said particles according to the present invention for the stabilization of said beverages proves to be particularly advantageous, as it enables a stabilization by sedimentation (static stabilization) which is not only particularly effective, but also rapid, since said particles, as already noted, do not require hydration and furthermore the step of sedimentation of the particles according to the present invention proves to be very rapid with the formation of compact sediments.

The subject matter of the present invention further relates to a filter cartridge that is suitable for the stabilization of a beverage having a pH lower than 4 through the removal of proteins and, preferably, of metals, comprising at least one porous medium and a plurality of functionalized mesoporous silica particles that at least partially coat said at least one porous medium, wherein said at least one porous medium is characterised by having an average pore size that is smaller than the average diameter of said particles, such as to prevent said particles from passing through said at least one porous medium.
The functionalized mesoporous silica particles are particles functionalized with at least one group having an acidic functionality of formula (I) and/or at least one group having a hydrophobic functionality of formula (II), as previously described.
The functionalization of the particles is obtained from the reaction of anchorage, to the surface of said silica, of:
(i) at least one precursor of a group having an acidic functionality of formula (Ia) as previously described and/or
(ii) at least one precursor of a group having hydrophobic functionality of formula (IIa) as previously described,
wherein the precursor (Ia) and/or (IIa) bind to the surface of said silica by means of at least one silicon-oxygen bond, preferably by means of at least two silicon-oxygen bonds, more preferably by means of at least three silicon-oxygen bonds.
The particles preferably have a diameter comprised between 0.1 and 200 µm and comprise pores having a diameter larger than 1 nm, with the component comprised between 5 and 50 nm greater than 50%, preferably greater than 60%.
Said at least one porous medium is preferably an inert porous medium; it is preferably an inert porous septum.

The present invention also relates to a filter device suitable for the stabilization of a beverage having a pH lower than 4 through the removal, by filtration, of proteins and, preferably, of metals, said device comprising a main body defining an inlet conduit for the beverage to be stabilized, an outlet conduit for the stabilized beverage and a plurality of channels that extend between said inlet conduit and said outlet conduit; each channel passes through at least one filter cartridge as previously described. Without wishing to be bound to a specific theory, the Applicant has found that the filter cartridge and the filter device according to the present invention prove to be particularly advantageous for the purposes of stabilizing a beverage having a pH lower than 4, since they enable the stabilization to be carried out in a continuous flow, thus further reducing the times of the stabilization process as it is not necessary to wait for the sedimentation of the particles.
The present invention also relates to a method for stabilizing a beverage having a pH lower than 4 through the removal of proteins and, preferably, of metals, said method comprising the steps of:
a) placing mesoporous silica particles in contact with a volume of a beverage, preferably adding said particles to said volume of beverage under stirring;
b) allowing said particles to sediment and separating the beverage thus stabilized;
said mesoporous silica particles being functionalized particles as described above.

Said method preferably does not comprise further steps of pre-treating the particles (such as, for example, a step of hydrating the particles) or posttreatment steps for the treated beverage.
According to a particularly preferred embodiment of the method according to the present invention, said step of placing the functionalized mesoporous silica particles in contact with a volume of a beverage is a step a1) carried out continuously by passing a flow of a beverage to be stabilized through at least one filter cartridge comprising a plurality of said particles as previously described or through the filter device comprising at least one filter cartridge.
The method preferably also comprising a step b1), after step b), of collecting the volume of said beverage thus stabilized.
According to a preferred embodiment of the invention, the method comprises a step c), after step b) and/or b1), of recovering and regenerating the particles, which can thus be used again in a new beverage stabilization cycle.

### EXAMPLES

### Example 1 - synthesis of functionalized mesoporous silica particles according to the present invention.

Macroparticles of mesoporous silica functionalized with acidic functions and hydrophobic functions were synthesised. 13 g of Pluronic P123 (PEG-PPG-PEG, Pluronic^{®} P123) and 0.3 g of NH₄F were initially dissolved in 400 mL of HCI 2M.

The mixture was left under stirring at room temperature until obtaining the total dispersion of the P123 and the formation of micelles within the reaction mixture.

The reaction mixture was heated to a temperature of 40 °C and 26 ml of TEOS (tetraethyl orthosilicate) were added under vigorous stirring.

After the formation of the porous silica, 2 ml of triethoxy(octyl)silane, 1.2 ml of (3-mercaptopropyl) trimethoxysilane and 10 ml of 30% H₂O₂ were added in succession.

The product obtained was heated to a temperature of 100 °C for 8 hours. The functionalized mesoporous silica was then washed under reflux with methanol for 24 hours until complete removal of the P123.

The methanol was then separated by filtration from the FMS and the finished product was air dried at a temperature greater than 60 °C.

### Example 1.1 - physicochemical characterisation

The functionalized mesoporous silica particles synthesised as described in Example 1 were characterised from a physicochemical standpoint.

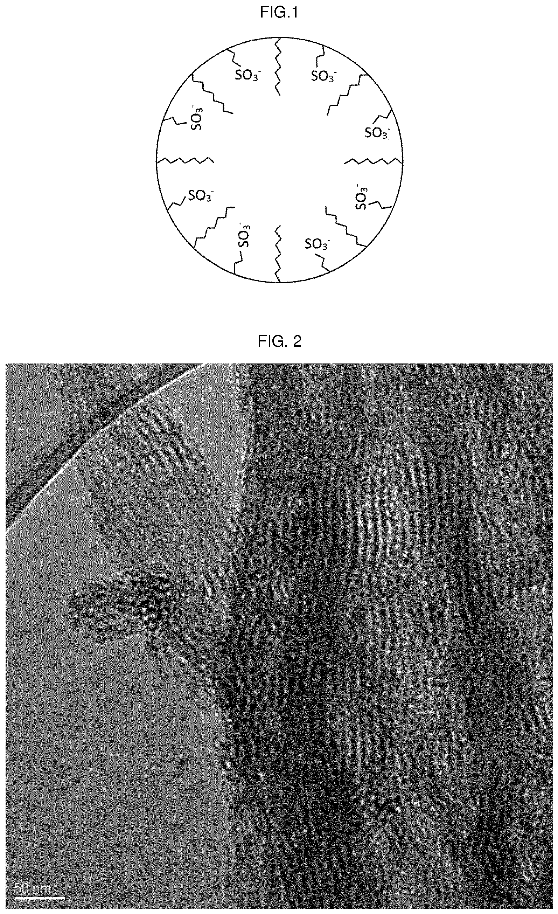

As can be appreciated from the micrography shown in Figure 2, the silica particles obtained are porous particles.

The method used for the porosimetry analysis is the DFT (density functional theory) with nitrogen gas-volumetric adsorption at 77K by means of a Micromeritics ASAP2020.

The pore size distribution is the following:

| | |
|---|---|
| pores w/diameter 1-5 nm | 26.6 % |
| pores w/diameter 5-50 nm | 62.5% |
| pores 50-100 nm | 6.7% |
| pores > 100 nm | 4.2% |

With this method it was further possible to determine the total surface area of the functionalized mesoporous silica particles as obtained in Example 1. The total area is equal to 700 m²/g.

### Example 2 - Stability test

Various analytic tests were conducted for the purpose of evaluating the protein stability of different samples of wine.

The tests conducted are based on the use of factors destabilizing the proteins present in the wine, such as heat and/or the addition of tannin, in order to verify the reactivity of the protein compounds present in the wine after the possible treatment. As previously mentioned, for the purposes of the present invention the protein compounds generically defined as unstable are considered to belong, from a chemical point of view, to the chitinase and thaumatin groups. As a result of their charge and hydrophobicity characteristics, these molecules tend to become insoluble over time, thus destabilizing the wine in which they are present. By verifying the variation in turbidity under the specific test conditions described below it is possible to have an estimate of the protein instability present in the wines tested.

The stability tests were performed on samples treated by means of a static stabilization process which provides for the addition of the material (bentonite for the comparative tests or particles according to the present invention) to the mass of the beverage to be treated (different varieties of wine in this specific case), which is then left under stirring in order to distribute the material evenly and enable optimal interaction. The exhausted material is then allowed to sediment and the stabilized beverage is filtered.

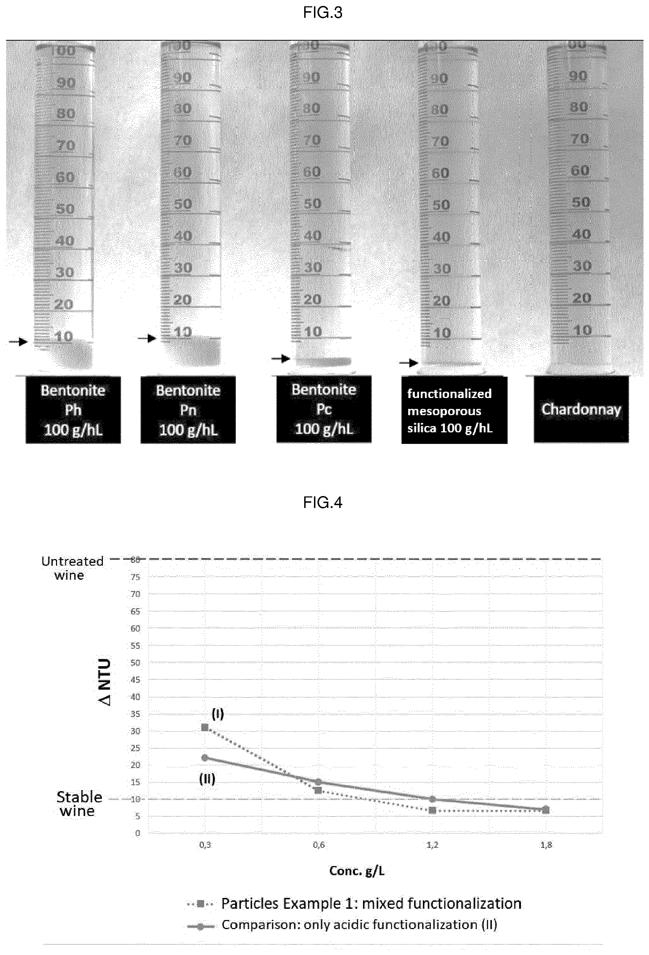

As it is possible to observe from Figure 3, which shows the sediments obtained by treating Chardonnay wine with the particles obtained as per Example 1 and with different commercial bentonites, the amount of sediment that is obtained (after 24 hours) using the particles according to the present invention is considerably reduced.

### Example 2.1 - Heat test on the wine variety Erbaluce 2018

Three different samples of wine (Erbaluce 2018) were subjected to an instability test under heating: a control sample, a sample treated with 60 g/hL of PLC bentonite, and a sample treated with 60 g/hL of functionalized mesoporous silica particles according to the present invention.

In examples 2.1-2.5, the treatment with PLC bentonite or with the particles of the present invention was carried out according to the process typically used for traditional bentonite, that is, by suspending the material (PLC bentonite or particles of the invention) in the wine and allowing it to sediment.

Each sample was then filtered with a 0.45 µm membrane and the turbidity thereof was measured T1 (NTU 1). Each sample of wine was then kept in a water bath at a temperature of 80 °C for 30 minutes and allowed to cool. As soon as the sample reached room temperature, a second turbidity measurement T2 (NTU 2) was performed.

A sample of wine is considered stable if: ΔNTU = (T2-T1) < 2.

The results obtained for the various samples are shown in Table 1.

### Example 2.2 - heat test with tannin

The same samples of wine as in Example 2.1 were also subjected to an instability test under heating and in the presence of tannin. In this case as well, each sample was filtered with a 0.45 µm membrane. A solution of gallic tannin with a concentration of 100 g/l was then added, in an amount of 2.5% v/v, to each previously filtered sample of wine. The turbidity T1 (NTU 1) was then measured. Each sample of wine was then kept in a water bath at a temperature of 80 °C for 30 minutes and allowed to cool. As soon as the sample reached room temperature, a second turbidity measurement T2 (NTU 2) was performed.

A sample of wine is considered stable if: ΔNTU = (T2-T1) < 10.

The results obtained for the various samples are shown in Table 1.

**Table 1**

| **Wine sample Erbaluce 2018** | **Heat test. Example 2.1 (ΔNTU)** | **Heat test with tannin. Example 2.2 (ΔNTU)** |
|---|---|---|
| Control | 3.7 | 68.6 |
| sample treated with 60 g/hL of PLC bentonite | 1.5 | 10.5 |
| sample treated with 60 g/hL of functionalized mesoporous silica particles according to the present invention - Example 1 | 0.4 | 1.4 |

Based on the results, it can be observed that the functionalized mesoporous silica particles according to the present invention are considerably more efficient in stabilizing wine compared to the use of bentonite, the dose used being equal.

### Example 2.3 - Heat test on the wine variety Trebbiano 2018

Similarly to what was done in Example 2.1, instability tests were performed under heating using, in the place of the Erbaluce 2018 variety, a different wine variety: Trebbiano 2018.

The results obtained for the various samples are shown in Table 2.

**Table 2**

| **Wine samples Trebbiano 2018** | **Heat test. Example 2.3 (ΔNTU)** |
|---|---|
| Control | 2.4 |
| sample treated with 60 g/hL of PLC bentonite | 1.9 |
| sample treated with 60 g/hL of functionalized mesoporous silica particles according to the present invention. Example 1 | 0.9 |

These results confirm the behaviour of the PLC bentonite and of the functionalized mesoporous silica particles according to the present invention and demonstrate that the performances obtained are independent of the variety of wine treated.

### Example 2.4 - heat test - comparison with non-functionalized silicas

Comparative tests were conducted with different samples of the wine variety Sauvignon blanc 2018, treated with the functionalized mesoporous silica particles according to the present invention, with mesoporous silica particles synthesised in a manner similar to the process according to the present invention but without a functionalization step and with porous commercial silicas, likewise not functionalized (SBA 15 and MCM 41 - ACS Material LLC).

The tests were performed in a similar manner to what was described in the previous Examples 2.1-2.3.

The results are shown in the table below.

**Table 3**

| **Wine sample Sauvignon blanc 2018** | **Heat test (ΔNTU)** | **Heat test with tannin (ΔNTU)** |
|---|---|---|
| Control | 8.4 | 168 |
| sample treated with 70 g/hL of functionalized mesoporous silica particles according to the present invention. Example 1 | 1.6 | 7.3 |
| sample treated with 70 g/hL of mesoporous non-functionalized silica particles | 7.2 | 136 |
| sample treated with 60 g/hL of SBA 15 silica | 7.3 | 148 |
| sample treated with 600 g/hL of SBA 15 silica | 7.2 | 144 |
| sample treated with 60 g/hL of MCM 41 silica | 7.9 | 154 |
| sample treated with 600 g/hL of MCM 41 silica | 7.5 | 151 |

The results obtained show that the functionalization of silica according to the present invention is indispensable for obtaining the stabilization of the wine. The functionalized mesoporous silica particles according to the present invention in fact show to be effective in stabilizing wine, unlike the non-functionalized silicas taken into consideration.

### Example 2.5 - heat test with tannin - comparison between mesoporous silicas functionalized differently

Stabilization tests were conducted on wine treated with functionalized mesoporous silica particles with solely acidic functions (comprising the - SO₃H group) in an amount equal to 10% by weight relative to the total weight of the particles and with functionalized mesoporous silica particles with both acidic functions (comprising the -SO₃H group) in an amount equal to 5% by weight relative to the total weight of the particles and hydrophobic functions (in an amount equal to 5% by weight relative to the total weight of the particles), synthesised according to Example 1. Protein stability was evaluated by means of the heat test with tannin as previously described. The results obtained are shown in the graph in Figure 4. As it is possible to observe, the silica particles comprising the dual acidic and hydrophobic functionalization show to be more effective in the dosage interval comprised between 0.6 and 1.8 g/l compared to functionalized silica particles with acidic functions alone. The dose actually necessary for complete stabilization of the wine (ΔNTU ≤ 10) is about 0.8 g/l in the case of functionalized silica particles with both acidic and hydrophobic functions and about 1.2 g/l in the case of functionalized silica particles with acidic functions alone. This effect can be explained by the different affinity of the two materials for the two families of proteins present in the wine (thaumatins and chitinases).

This example highlights that on the one hand mixed functionalization with acidic and hydrophobic functions leads to a considerable improvement of the effectiveness in protein removal, while on the other hand it is in any case possible to stabilize wine using mesoporous silica particles having solely an acidic functionality. In the latter case, the silica particles must be used in larger doses.

### Example 2.6 - heat test and heat test with tannin by flow stabilization.

The particles according to the present invention as synthesised in Example 1 were also tested in the case of the flow stabilization process.

The particles according to the present invention can in fact also be used in continuous (i.e. flow) stabilization processes, unlike bentonite, which does not allow the formation of permeable filtration panels, making it impossible to carry out a continuous-flow filtration and stabilization process.

In flow stabilization, the wine containing the unstable proteins passes through a filter cartridge as described in the present patent application, in this specific case comprising the functionalized mesoporous silica particles as per Example 1 deposited on an inert porous septum capable of retaining the aforesaid particles. As it passes through the filter panel the wine transfers the proteins to the particles according to the present invention.

The data shown in Table 4 indicate that the process of protein stabilization by filtration works well. The flow stabilization has slightly greater effectiveness than stabilization with the traditional technique (similar to the bentonite technique).

**Table 4**

| **Sample** | **Heat test (ΔNTU)** | **Heat test with tannin (ΔNTU)** |
|---|---|---|
| Gewurztraminer wine control | 2.4 | 217 |
| Gewurztraminer in batch treatment with 60 g/hL of silica particles. Example 1 | 1.8 | 12 |
| Gewurztraminer in continuous-flow treatment with 60 g/hL of silica particles. Example 1 | 1.3 | 8.3 |

### Example 3 - metal removal test

The particles obtained as per Example 1 were tested to evaluate their ability to remove different types of metals present in a wine. Moreover, the results obtained were compared with the performances obtainable with a commercial bentonite.

Tables 5 and 6 show the main cations that must be considered following a treatment of wine with bentonite. From a chemical point of view, in fact, bentonite is classified as an aluminium silicate rich calcium, sodium and magnesium ions and iron oxides.

**Table 5: Chardonnay wine 2019, treated with 25 g/hL of each type of material**

| **Metal ppm** | **Chardo nnay wine as such (AS)** | **Bentonite** | **FMS particles Example 1** | **% Bentonite Vs AS** | **% FMS Vs AS** | **% FMS Vs Bentonite** |
|---|---|---|---|---|---|---|
| Al | 0.41 | 0.50 | 0.41 | 21.95 | -1.22 | -23.20 |
| Fe | 1.69 | 1.87 | 1.66 | 10.98 | -1.48 | -12.46 |
| Na | 14.0 | 19.6 | 12.2 | 40.0 | -12.9 | -52.9 |
| Mg | 125 | 126 | 124 | 0.8 | -0.8 | -1.60 |

**Table 6: Pinot grigio wine 2019, treated with 150 g/hL of each type of material**

| **Metal ppm** | **Pinot grigio wine as such (AS)** | **Bentonite** | **FMS particles Example 1** | **% Bentonite Vs AS** | **% FMS Vs AS** | **% FMS Vs Bentonite** |
|---|---|---|---|---|---|---|
| Al | 0.23 | 0.48 | 0.20 | 15.85 | -51.22 | -67.07 |
| Fe | 0.38 | 1.00 | 0.38 | 166.67 | 1.33 | -165.33 |
| Na | 12.0 | 28.0 | 11.0 | 133.33 | -8.33 | -141.67 |
| Mg | 116.00 | 116.70 | 114.00 | 0.60 | -1.72 | -2.33 |

As may be seen from the results shown above, wine treated with the functionalized mesoporous silica particles according to the present invention (as per Example 1) has a lower content of metals on average than wine treated with bentonite and, in the case of some cations, an even lower content than untreated wine.

### Example 4 - sensory test

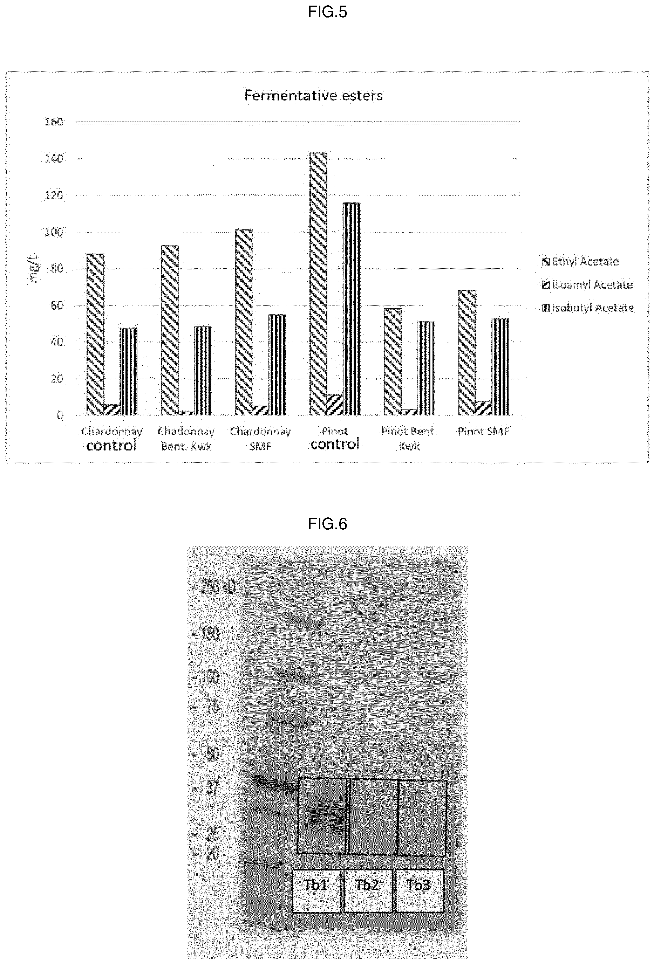

The particles obtained as per Example 1 were also tested to evaluate their sensory impact, which involved analysing the concentration of fermentative esters (Figure 5) and terpenes (Figure 6) in different untreated wines and wines treated respectively with commercial bentonite or with the particles according to the present invention.

As can be observed from both graphs in Figures 5 and 6, a larger concentration of compounds present is indicative of an advantageous lower removal by the particles according to the present invention when used in the treatment of wines.

### Example 5 - electrophoretic analysis

Three different samples of wine (Trebbiano 2018) were subjected to SDS-PAGE electrophoretic analysis: a control sample (Tb1), a sample treated with 60 g/hL of PLC bentonite (Tb2), and a sample treated with 60 g/hL of functionalized mesoporous silica particles according to the present invention obtained as per Example 1 (Tb3).

This technique was used to confirm, in an unequivocal manner, whether or not unstable proteins were present in the wine. Electrophoretic analysis consists in exposing proteins to an electric field and running the molecules over a polyacrylamide gel. By doing so it is possible to differentiate the various protein compounds into groups, based on their molecular mass. Since the two families of unstable proteins most commonly contained in wines (Chitinases and Thaumatins) normally have a molecular mass comprised between 20,000 and 30,000 Dalton, it is possible, following staining in that interval, to determine the presence or absence of such proteins.

The results obtained for each of the samples are shown in Fig.7, where one may clearly observe the stained band in the case of the control sample, whilst in the case of samples treated with bentonite and particles of the present invention, no band is observed, thus demonstrating the stabilizing effectiveness of the particles according to the present invention.

### Example 6 - Effect of NH₄F on the synthesis and performance of the functionalized mesoporous silica particles.

A comparative experiment was conducted to assess the role of NH₄F in the synthesis described in Example 1 in order to verify its effect on the ability of the final product to stabilize wine.

Particles were synthesised by repeating the steps of Example 1, but with a reaction mixture without ammonium fluoride.

The product obtained was capable of completely stabilizing the wine, but with about double the amount compared to the product obtained using NH₄F (1.6-1.7 g/l Vs 0.8 g/l).

## Claims

1. Mesoporous silica particles, wherein said silica is functionalized on the surface with:
(i) at least one group having acidic functionality, wherein said group has the general formula (I): 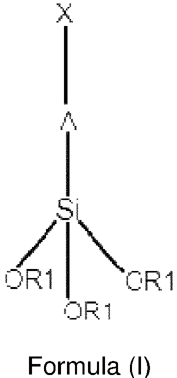 and
(ii) at least one group having hydrophobic functionality, wherein said group has the general formula (II): 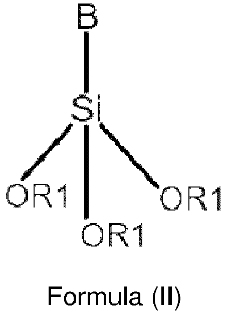
wherein at least one of the R1 groups of the formulas (I) and (II) represents a covalent bond between the oxygen of the respective formula (I) or (II) and the silicon of the silica (covalent silicon-oxygen bond), the other two R1 groups being independently H or a covalent silicon-oxygen bond;
A is a linear or branched, saturated or unsaturated C₂-C₁₂ alkyl group, preferably C₂-C₈, more preferably C₃-C₆, optionally substituted with at least one group selected from: ether (-O-), thioether (-S-), amino (-NH-), cyano (-CN), carbonyl (-CO), epoxide, a halogen, preferably -Cl or -Br, aryl, optionally substituted, and a combination thereof;
X is an acidic functionality selected in the group consisting of: -SO₃H, - COOH, -PO(OH)₂, and a combination thereof;
B is a linear or branched, saturated or unsaturated C₂-C₁₈ alkyl group, preferably C₄-C₁₈, more preferably C₆-C₁₄, even more preferably C₈-C₁₂, optionally substituted with at least one group selected from ether (-O-), thioether (-S-), amino (-NH-), cyano (-CN), carbonyl (-CO), epoxide, a halogen, preferably -Cl or -Br, aryl, optionally substituted, and a combination thereof;
wherein said particles have a diameter comprised between 0.1 and 200 µm and comprise pores having a diameter larger than 1 nm, with the component comprised between 5 and 50 nm greater than 50%, preferably greater than 60%.

2. The mesoporous silica particles according to claim 1, **characterized by** having a non-homogeneous size distribution of said pores, wherein from 20 to 30% of the pores have an average diameter, comprised between 1 and 5 nm, from 50 to 65% of the pores have an average diameter comprised between 5 and 50 nm and from 6 to 8% of the pores have an average diameter comprised between 50 and 100 nm and from 3 to 5% of the pores have a diameter larger than 100 nm.

3. The mesoporous silica particles according to claim 1 or 2, comprising from 86 to 92% by weight of silica, from 4 to 14% by weight of said at least a first alkyl-silane group and at least a second alkyl-silane group, preferably from 4 to 7% by weight of said at least a first alkyl-silane group and from 4 to 7% by weight of said at least a second alkyl-silane group.

4. The mesoporous silica particles according to any one of the preceding claims, **characterised by** a surface area larger than 500 m²/g, preferably comprised between 500 and 1000 m²/g.

5. A process for preparing mesoporous silica particles according to any one of the preceding claims, comprising the steps of:
a) preparing an acidic aqueous suspension of a polymeric template, wherein said acidic aqueous suspension optionally comprises a fluoride, and mixing until the formation of micelle templates;
b) adding a tetra alkyl orthosilicate as a silica precursor, said tetra alkyl orthosilicate preferably being selected in the group consisting of: tetra ethyl orthosilicate (TEOS), tetra methyl orthosilicate and tetra propyl orthosilicate, until the formation of silica particles;
c) functionalizing the silica particles by adding:
(i) at least one precursor of group having an acidic functionality, wherein said precursor has the general formula (Ia): 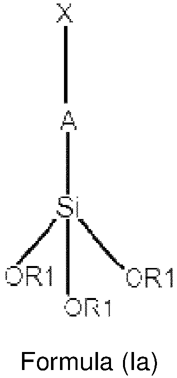 and
(ii) at least one precursor of a group having a hydrophobic functionality, wherein said precursor has the general formula (IIa): 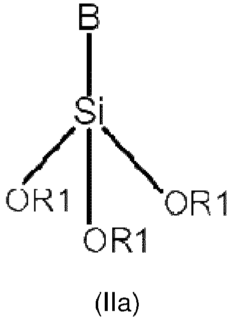
wherein A and B are as described in claim 1;
X is selected from: -SH, -COOH, -PO(OH)₂;
the R1 groups are independently selected from methyl, ethyl and propyl;
the R1 groups are preferably identical to one another and are selected from methyl, ethyl and propyl; more preferably the 3 R1 groups are methyl or ethyl.
d) removing the template, preferably by means of at least one wash with an alcohol.

6. A use of mesoporous silica particles for the removal of proteins from a beverage having a pH lower than 4, wherein said silica is functionalized with:
(i) at least one group having acidic functionality, wherein said group has the general formula (I): 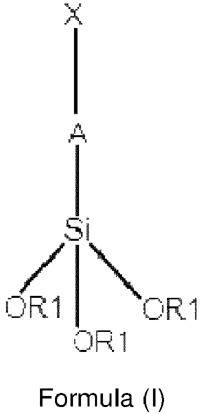 and/or
(ii) at least one group having hydrophobic functionality, wherein said group has the general formula (II): 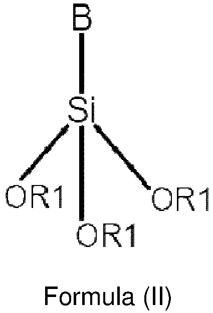
wherein at least one of the R1 groups of the formulas (I) and (II) represents a covalent bond between the oxygen of the respective formula (I) or (II) and the silicon of the silica (covalent silicon-oxygen bond), the other two R1 groups being independently H or a covalent silicon-oxygen bond;
A is a linear or branched, saturated or unsaturated C₂-C₁₂ alkyl group, preferably C₂-C₈, more preferably C₃-C₆, optionally substituted with at least one group selected from: ether (-O-), thioether (-S-), amino (-NH-), cyano (-CN), carbonyl (-CO), epoxide, a halogen, preferably -CI or -Br, aryl, optionally substituted, and a combination thereof;
X is an acidic functionality selected in the group consisting of: -SO₃H, - COOH, -PO(OH)₂, and a combination thereof;
B is a linear or branched, saturated or unsaturated C₂-C₁₈ alkyl group, preferably C₄-C₁₈, more preferably C₆-C₁₄, even more preferably C₈-C₁₂, optionally substituted with at least one group selected from ether (-O-), thioether (-S-), amino (-NH-), cyano (-CN), carbonyl (-CO), epoxide, a halogen, preferably -Cl or -Br, aryl, optionally substituted, and a combination thereof;
wherein said particles have a diameter comprised between 0.1 and 200 µm and comprise pores having a diameter larger than 1 nm, with the component comprised between 5 and 50 nm greater than 50%, preferably greater than 60%.

7. The use according to claim 6 for the further simultaneous removal of metals from said beverage.

8. The use according to claim 6 or 7, wherein said beverage comprises or consists of: wine, beer, cider, and a combination thereof.

9. A filter cartridge suitable for the stabilization of a beverage having a pH lower than 4 through the removal of proteins and, preferably, of metals, comprising at least one porous medium and a plurality of mesoporous silica particles which at least partially coat said at least one porous medium, wherein said at least one porous medium is **characterised by** having an average pore size that is smaller than the average diameter of said particles, such as to prevent said particles from passing though said at least one porous medium; said mesoporous silica particles being as defined in claim 6.

10. A filter device suitable for the stabilization of a beverage having a pH lower than 4 through the removal, by filtration, of proteins and, preferably, of metals, said device comprising a main body defining an inlet conduit for the beverage to be stabilized, an outlet conduit for the stabilized beverage and a plurality of channels extending between said inlet conduit and said outlet conduit, each channel passing through at least one filter cartridge according to claim 9.

11. A method for stabilizing a beverage having a pH lower than 4 through the removal of proteins and, preferably, of metals, said method comprising the steps of:
a) placing mesoporous silica particles in contact with a volume of a beverage, preferably adding said particles to said volume of beverage under stirring;
b) allowing said particles to sediment and separating the volume of said beverage thus stabilized;
said mesoporous silica particles being as defined in claim 6.

12. The method according to claim 11, wherein said step of placing the mesoporous silica particles in contact with a volume of a beverage is a step a1) performed continuously by passing a flow of a beverage to be stabilized through at least one filter cartridge comprising a plurality of said particles according to claim 9 or through the filter device comprising at least one filter cartridge according to claim 10; said method comprising a step b1) of collecting the volume of said beverage thus stabilized.
